# EUROPEAN PATENT SPECIFICATION

(11) **EP 2 538 067 B1**
(45) Date of publication and mention of the grant of the patent: **08.10.2014**
(21) Application number: 11170542.2
(22) Date of filing: 20.06.2011
(51) Int. Cl.: F16K 27/02, F16L 27/08, F16L 37/088, F02M 63/02, F02M 51/00, F02M 59/46, F02M 61/16, F02M 63/00

(54) **Assembly for an electrically operated valve**
Anordnung für ein elektronisch betätigtes Ventil
Ensemble pour soupape à commande électrique

(43) Date of publication of application: 26.12.2012
(73) Proprietor: Delphi International Operations Luxembourg S.à r.l., 4940 Bascharage (LU)
(72) Inventor: Dupont, Richard, 37400 Amboise (FR); Marechal, Michel, 41150 Chouzy Sur Cisse (FR)
(74) Representative: Neill, Andrew Peter

(56) References cited:
- EP-A1- 1 612 400
- EP-A1- 2 199 652
- DE-A1- 4 322 546
- DE-A1- 4 427 597
- DE-A1- 10 240 880
- DE-A1- 19 938 865
- US-A1- 2003 152 424

## Description

The invention relates to an assembly for an electrically operated valve in the automotive field, and more precisely for a discharge valve of a common rail in a fuel injection system. The invention also relates to a process for manufacturing such assembly and to a process for disassembling such assembly.

### BACKGROUND OF INVENTION:

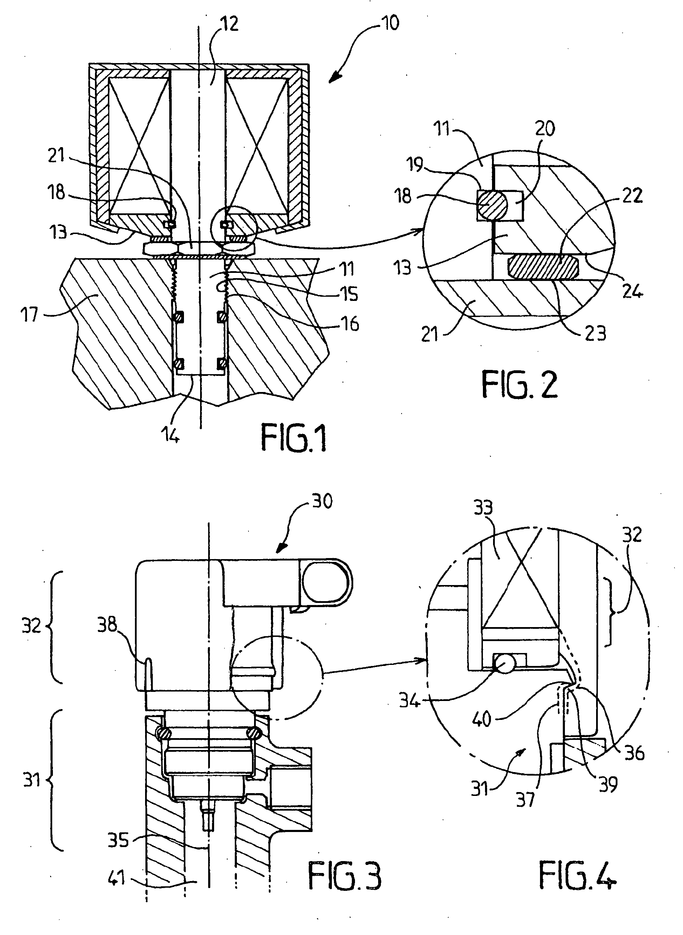

In reference to figure 1, a known assembly 10 for an electrically operated valve - not represented - comprises a coil unit formed by a substantially cylindrical housing 11, one (12) of the ends of which is inserted in the axial hole of a solenoid 13 aimed to control the movement of the valve.

The other end 14 of the cylindrical housing 11 carries a thread 15 which cooperates with a tapping 16 of a hydraulic unit 17 aimed to introduce fuel at a pressure to be increased thereafter by the assembly 10 before its final injection within a combustion chamber.

In order to maintain the position of the coil unit within the assembly 10, the assembly 10 comprises a split ring 18 extending itself into both a first circular cavity 19 on the periphery of the housing 11 and a second circular cavity 20 on the inside face of the solenoid 13 axial hole.

The respective locations of these two cavities, or grooves, 19, 20 are suited in height so that said two grooves 19, 20 are positioned one facing the other when the solenoid 13 comes into abutment against a collar 21 i.e. when the solenoid 13 comes into its operating position relatively to the housing 11.

An elastically compressible ring 22 is arranged around the housing 11 of the electrically operated valve, between a first contact surface 23 of the collar 21 and a second opposed annular contact surface 24 of the solenoid 13.

When fitting the solenoid 13 on the valve housing 11, the ring 22 is compressed until the solenoid 5 is axially locked.

Such a process allows positioning the solenoid 11 - by axial rotation - during the manufacturing of the assembly 10 using a minimum force while the load over the elastic ring 22 avoids rotating the solenoid 13 during the product life.

However, this known assembly for an electrically operated valve in the automotive field requires many different elements which are bulky and costly in the manufacturing process for both their price and the time required therefor. Moreover, the coil unit is generally covered by a bearing cap built on a treated metal which must avoid magnetic interference with the solenoid magnetic field, such as stainless magnetic steel and/or coated steel. Thus the cost of the assembly is increased by such treated metal cost.

DE 4322546 discloses a solenoid operated valve having a two part bolted construction, US2003/0152424 discloses an assembly for clamping together two parts of a solenoid valve, the assembly comprising a threaded sleeve and a snap ring. EP 2 199 652 discloses a fluid tight connection for a vehicle.

### SUMMARY OF THE INVENTION

The aim of the invention is to remedy at least to one of the disadvantages previously mentioned by proposing an assembly for an electrically operated valve in the automotive field aimed to increase the injection pressure of a fuel within a combustion chamber, said assembly comprising both a coil unit wherein a solenoid can control the movements of the electrically operated valve along a given axis and an hydraulic unit to provide fuel at the injection pressure, an elastic ring being axially compressed between said coil unit and said hydraulic unit, characterized in that a part of the coil unit and a part of the hydraulic unit are locked under a mechanical pressure due to an elastic deformation of said coil unit part and/or said hydraulic unit part while the elastic ring maintains an axial load keeping said coil unit part and/or said hydraulic unit part under tension.

An assembly according to the invention has a limited number of elements so that its cost is reduced. Indeed, no split ring is required to maintain the coil unit, and particularly its solenoid, in the assembly.

Thus the cost of an assembly is decreased by reducing both the total cost of its elements and the time required for its manufacture.

Furthermore, it has to be underlined that manufacturing lines which already exists to manufacture assemblies according to prior art can be used to manufacture assemblies according to embodiments of the invention.

In one embodiment, the part of the coil unit delivering the mechanical pressure surrounds the hydraulic unit.

In one embodiment, the coil unit part is deformed radially relatively to the axis of the valve movements.

In one embodiment, the coil unit presents axially extended slots.

In one embodiment the coil unit presents grooves receiving shoulders located on the hydraulic unit.

In one embodiment the coil unit presents a cap made of magnetic steel and/or devoid of coating.

The invention also relates to a process for manufacturing an assembly for an electrically operated valve in the automotive field aimed to increase the injection pressure of a fuel within a combustion chamber, said process delivering an assembly comprising a coil unit, wherein a solenoid can control the movements of the electrically operated valve along a given axis, and an hydraulic unit to provide fuel at the injection pressure, an elastic ring being axially compressed between said coil unit and said hydraulic unit, characterized in that it comprises the step of locking a part of the coil unit with a part of the hydraulic unit under a mechanical pressure due to an elastic deformation of said coil unit part and/or said hydraulic unit part while the elastic ring maintains an axial load keeping said coil unit part and/or said hydraulic unit part under tension.

In one embodiment, the process further comprises the step of elastically deforming the coil unit part which surrounds the hydraulic unit to achieve the locking.

In one embodiment, the process further comprises the step of fitting shoulders located on the hydraulic unit within grooves located in the coil unit.

The invention also relates to a process for disassembling an assembly for an electrically operated valve in the automotive field aimed to increase the injection pressure of a fuel within a combustion chamber, said assembly comprising both a coil unit wherein a solenoid can control the movements of the electrically operated valve along a given axis and an hydraulic unit to provide fuel at the injection pressure, an elastic ring being axially compressed between said coil unit and said hydraulic unit, characterized in that, a part of the coil unit and a part of the hydraulic unit being locked by under a mechanical pressure due to an elastic deformation of said coil unit part and/or said hydraulic unit part, it comprises the step of forcing a further elastic deformation of said coil unit part and/or said hydraulic unit part in order to unlocked the coil unit from the hydraulic unit.

The invention also relates to a disassembling tool for operating on an assembly according to any of the above embodiments characterized in that it comprises a threaded part wherein a nut is screwed in order to control the movements of a support comprising an extremity with a sharp shape aimed to unlock the coil unit from the hydraulic unit.

### BRIEF DESCRIPTION OF DRAWINGS

Other characteristics and advantages of the invention will become apparent from the following description of a non-limiting embodiment of the invention, with reference to the attached figures in which:
- Figures 1 is a view in diagrammatic section showing an assembly according to the prior art;
- Figure 2 is a view in section to a larger scale of some details circled in figure 1;
- Figure 3 is a view in a partial diagrammatic section showing an assembly according to an embodiment of the invention;
- Figure 4 is a view in section to a larger scale of some details circled in figure 3;
- Figures 5 in diagrammatic section showing an assembly according to an embodiment of the invention cooperating with a disassembling tool;
- Figure 6 is a view in section to a larger scale of some details circled in figure 5, and
- Figure 7 is a view in perspective showing different elements of a disassembling tool according to an embodiment of the invention;

### DETAILED DESCRIPTION OF AN EMBODIMENT OF THE INVENTION

Figure 3 represents an assembly 30 for an electrically operated valve in the automotive field, a bear cap of the assembly being partially represented in perspective or in section in one part or another of its axis 35.

Such assembly 30 aims to control the injection pressure of fuel provided through a common rail 41 to different injectors of respective combustion chambers, the injectors and the combustion chambers not being represented. For that purpose the assembly 30 might perform as a high pressure valve (HPV) at least one of the following main functions:
- Lowering the pressure in the common rail 41 by discharging fuel,
- Heating the fuel provided to the common rail 41 in cold start engine conditions,
- Maintaining a minimum pressure in the common rail 41 (natural pressure) to start and run the engine in case of an open circuit of the actuator, or venting the common rail 41 when the engine is switched off by discharging pressurized mixture of "air + fuel".

The assembly 30 can also control the high pressure in the common rail 41 in specific modes of fuel distribution such:
- In absence or failure of an inlet metering valve delivering fuel quantity needed to generate pressure demand in rail,
- A fault on a high pressure sensor (HPS) measuring the rail pressure, and
- An overpressure in the high pressure circuit (PLV function).

The assembly 30 comprises a coil unit 32 wherein a solenoid 33 (figure 4) controls the movements of the electrically operated valve along an axis 35. The housing and valves are not represented.

Furthermore, an elastic ring 34 is axially compressed between the coil unit 32 and the hydraulic unit 31. Among other purposes, the elastic ring 34 limits the rotation of the solenoid 33 during its use while allowing its positioning - by rotation around axis 35 - during the manufacture of the assembly with a minimum force.

In the assembly 30, a part 36 of the coil unit 32 and a part 37 of the hydraulic unit 31 are locked under a mechanical pressure due to an elastic deformation of part 36 of the coil unit bear cap.

Indeed, as represented in figure 4, the mechanical pressure is due to an elastic deformation of the coil unit part 36 which surrounds the hydraulic unit 32.

With this position, the bear cap of the coil unit can be manufactured on magnetic metal - typically magnetic steel. Indeed, the surrounding bear cap surface corresponds with the magnetic field lines generated by the solenoid so that no interference is produced by using a magnetic steel bear cap.

A magnetic metal being less expensive than a treated metal (coated), the manufacturing cost of the assembly is thus reduced as compared to a prior art assembly.

The elastic deformation of the housing part 36 is achieved radially relatively to the axis 35 of the valve movements during the manufacture of assembly 30.

The required amount of radial expansion of the coil unit part 36, represented by dotted lines in figure 4, is determined by material thickness choices or by axially extending slots 38.

Moreover, the coil unit 32 has grooves 39 receiving shoulders 40 located on the hydraulic part unit in order to clip and retain the position of the coil unit 32 versus the hydraulic unit 31.

Considering that the bear cap presents broadly a cylindrical shape whose height is around 20 cm and whose internal radius is around 15 cm, the surface width (radially measured) being around 2 cm, it appears that slots 38 extending themselves axially over 6 cm provide the required elasticity.

The process for manufacturing such assembly 30 appears thereby more simple than the prior art assembly process since no split ring has to be considered to lock the coil unit 32 regarding axial movement.

Indeed, such process only requires, for locking the part 36 of the coil unit 32 with the part 37 of the hydraulic unit 31, a mechanical pressure - or tension - to achieve an elastic deformation to clip/engage coil unit 32 with hydraulic unit 31.

For the embodiment previously described, the process is achieved by elastically deforming the coil unit part 36 which surrounds the hydraulic unit 31 while fitting the shoulders 40 of the hydraulic unit 31 within the grooves 39 located on the coil unit 32.

Similarly, the process for disassembling an assembly 30 is simplified since it only requires forcing a further elastic deformation of the coil unit part 36 and/or of the hydraulic unit part 37 in order to unlock the coil unit 32 from the hydraulic unit 31.

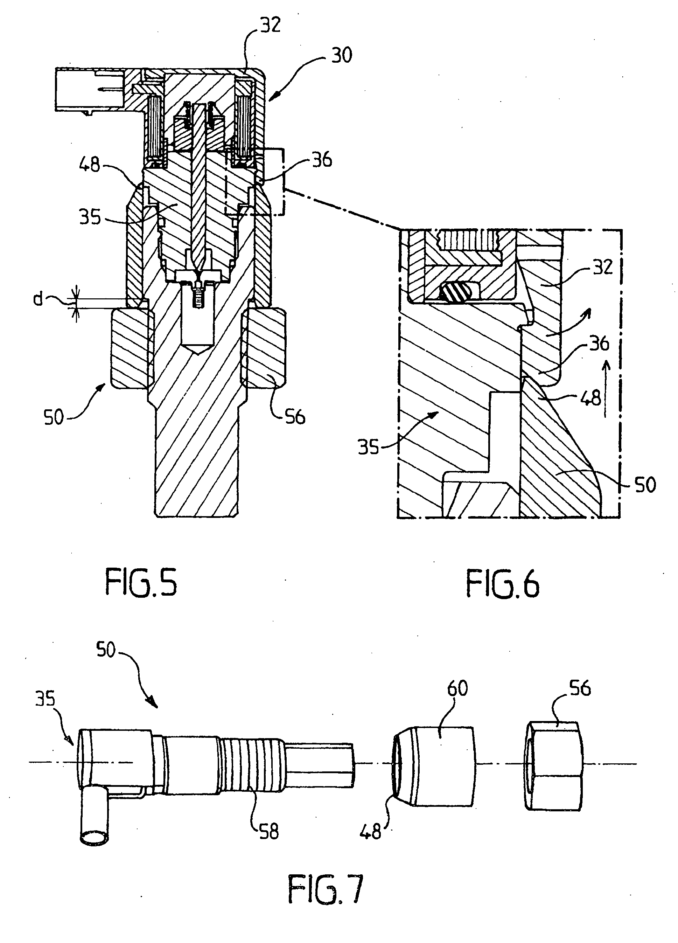

In figure 5, the assembly 30 is represented associated to a tool 50 performing the separation of the coil unit 32 from the hydraulic unit 35 without damaging any of these units.

For that purpose, the assembly 30 - removed from its operating position associated to a common rail 41 - is placed in contact with the tool 50 whose shape fits part of the assembly 30 shape as a common rail 41.

In this position, a sharp radial extremity 48 of the tool 50 faces the locked coil unit part 36 so that an extremity 48 of the tool 50 can unlocked/disengaged the coil unit part 36 from the shoulders 40 of the hydraulic unit 35.

More precisely, the extremity 48 can progress axially to push the coil unit part 32 radially and disengage it from the shoulder 40 of the hydraulic unit. To control the extremity 48 progress and limit its pressure on the coil unit part 36 to the necessary tension, the tool 50 comprises a nut 56 which can be screwed to force a controlled displacement d of the extremity 48.

Indeed, as represented in figure 7, the disassembling tool 50 presents a threaded part 58 cooperating with the nut 56 in order to control the displacement of a support 60 presenting the extremity 48.

Thus the position of the extremity 48 can precisely be determined towards the assembly 30, which ensures a precise action over the coil unit.

## Claims

1. An assembly (30) for an electrically operated valve in the automotive field aimed to increase the injection pressure of a fuel within a combustion chamber, said assembly comprising both a coil unit (32) wherein a solenoid can control the movements of the electrically operated valve along a given axis (35) and an hydraulic unit (31) to provide fuel at the injection pressure, an elastic ring (34) being axially compressed between said coil unit (32) and said hydraulic unit (31), a part (36) of the coil unit (32) and a part (37) of the hydraulic unit (31) being locked under a mechanical pressure due to an elastic deformation of said coil unit part (36) and/or said hydraulic unit part (37) while the elastic ring (34) maintains an axial load keeping said coil unit part (36) and/or said hydraulic unit part (37) under tension, **characterized in that**,
the part (36) of the coil unit (32) delivering the mechanical pressure surrounds the hydraulic unit (31) and wherein, the coil unit (32) presents grooves (39) receiving shoulders (40) located on the hydraulic unit (31).

2. An assembly (30) according to the preceding claim wherein the coil unit part (36) is deformed radially relatively to the axis (35) of the valve movements.

3. An assembly (30) according to any of the preceding claims wherein the coil unit (32) presents axially extended slots (38).

4. Assembly (30) according to any of the previous claims wherein the coil unit (32) presents a cap made of magnetic steel and/or devoid of coating.

5. Process for manufacturing an assembly (30) as set in any of the claims 1 to 4, the process comprising the step of locking the part (36) of the coil unit (32) with the part (37) of the hydraulic unit (31) under a mechanical pressure due to an elastic deformation of said coil unit part (36) and/or said hydraulic unit part (37) while the elastic ring (34) maintains an axial load keeping said coil unit part (36) and/or said hydraulic unit part (37) under tension.

6. Process according to claim 5 further comprising the step of elastically deforming the coil unit part (36) which surrounds the hydraulic unit (31) to achieve the locking.

7. Process according to claim 5 or 6 further comprising the step of fitting shoulders (40) located on the hydraulic unit (31) within grooves (39) located on the coil unit (32).

8. Process for disassembling an assembly (30) as set in any of the claims 1 to 4 the process comprising the step of forcing a further elastic deformation of said coil unit part (36) and/or of said hydraulic unit part (37) in order to unlock the coil unit (32) from the hydraulic unit (31).

9. A disassembling tool (50) aimed to operate on an assembly (30) according to any of the claims 1 to 4 and using the process of claim 8 **characterized in that** it comprises a threaded part (58) wherein a nut (56) is screwed in order to control the movements of a support (60) comprising an extremity (48) with a sharp shape aimed to unlock the coil unit (32) from the hydraulic unit (31).

## Patentansprüche

1. Anordnung (30) für ein elektrisch betätigtes Ventil auf dem kraftfahrzeugtechnischen Gebiet zur Steigerung des Einspritzdrucks eines Kraftstoffs in einem Brennraum, wobei die genannte Anordnung eine Spuleneinheit (32), wobei ein Elektromagnet die Bewegungen des elektrisch betätigten Ventils an einer bestimmten Achse (35) entlang steuern kann, und auch eine Hydraulikeinheit (31) zum Bereitstellen von Kraftstoff mit dem Einspritzdruck aufweist, wobei ein elastischer Ring (34) zwischen der genannten Spuleneinheit (32) und der genannten Hydraulikeinheit (31) axial zusammengepresst wird, wobei ein Teil (36) der Spuleneinheit (32) und ein Teil (37) der Hydraulikeinheit (31) unter einem mechanischen Druck aufgrund einer elastischen Verformung des genannten Spuleneinheit-Teils (36) und/oder des genannten Hydraulikeinheit-Teils (37) arretiert sind, während der elastische Ring (34) eine Axialbelastung aufrechterhält, so dass der genannte Spuleneinheit-Teil (36) und/oder der genannte Hydraulikeinheit-Teil (37) unter Spannung gehalten wird, **dadurch gekennzeichnet, dass**
der Teil (36) der Spuleneinheit (32), der den mechanischen Druck liefert, die Hydraulikeinheit (31) umgibt, und wobei die Spuleneinheit (32) Nuten (39) aufweist, die an der Hydraulikeinheit (31) befindliche Schultern (40) aufnehmen.

2. Anordnung (30) nach dem vorhergehenden Anspruch, wobei der Spuleneinheit-Teil (36) relativ zur Achse (35) der Ventilbewegungen radial verformt wird.

3. Anordnung (30) nach einem der vorhergehenden Ansprüche, wobei die Spuleneinheit (32) sich axial erstreckende Aussparungen (38) aufweist.

4. Anordnung (30) nach einem der vorhergehenden Ansprüche, wobei die Spuleneinheit (32) eine Kappe aus magnetischem Stahl und/oder ohne Beschichtung aufweist.

5. Prozess zur Herstellung einer Anordnung (33) gemäß einem der Ansprüche 1 bis 4, wobei der Prozess den Schritt des Arretierens des Teils (36) der Spuleneinheit (32) mit dem Teil (37) der Hydraulikeinheit (31) unter einem mechanischen Druck aufgrund einer elastischen Verformung des genannten Spuleneinheit-Teils (36) und/oder des genannten Hydraulikeinheit-Teils (37), während der elastische Ring (34) eine Axialbelastung aufrechterhält, aufweist, so dass der genannte Spuleneinheit-Teil (36) und/oder der genannte Hydraulikeinheit-Teil (37) unter Spannung gehalten wird.

6. Prozess nach Anspruch 5, der ferner den Schritt des elastischen Verformens des die Hydraulikeinheit (31) umgebenden Spuleneinheit-Teils (36) zum Erzielen der Arretierung aufweist.

7. Prozess nach Anspruch 5 oder 6, der ferner den Schritt des Einpassens von an der Hydraulikeinheit (31) befindlichen Schultern (40) in an der Spuleneinheit (32) befindliche Nuten (39) aufweist.

8. Prozess zum Demontieren einer Anordnung (30) nach einem der Ansprüche 1 bis 4, wobei der Prozess den Schritt des Erzwingens einer weiteren elastischen Verformung des genannten Spuleneinheit-Teils (36) und/oder des genannten Hydraulikeinheit-Teils (37) zum Lösen der Spuleneinheit (32) von der Hydraulikeinheit (31) aufweist.

9. Demontagewerkzeug (50), das für die Arbeit an einer Anordnung (30) nach einem der Ansprüche 1 bis 4 und unter Verwendung des Prozesses nach Anspruch 8 ausgelegt ist, **dadurch gekennzeichnet, dass** es einen mit Gewinde versehenen Teil (58) aufweist, wobei eine Mutter (56) geschraubt wird, um die Bewegungen eines Stützteils (60) zu steuern, das ein Ende (48) mit einem scharfen Gebilde aufweist, das für das Lösen der Spuleneinheit (32) von der Hydraulikeinheit (31) ausgelegt ist.

## Revendications

1. Ensemble (30) pour une valve à commande électrique dans le domaine automobile dont le but est d'augmenter la pression d'injection d'un carburant dans une chambre de combustion, ledit ensemble comprenant à la fois une unité à bobine (32) dans laquelle un solénoïde peut commander les mouvements de la valve à commande électrique le long d'un axe donné (35) et une unité hydraulique (31) pour fournir du carburant à la pression d'injection, une bague élastique (34) étant axialement comprimée entre ladite unité à bobine (32) et ladite unité hydraulique (31), une partie (36) de l'unité à bobine (32) et une partie (37) de l'unité hydraulique (31) étant bloquées sous une pression mécanique due à une déformation élastique de ladite partie (36) de l'unité à bobine et/ou de ladite partie (37) de l'unité hydraulique alors que la bague élastique (34) maintient une charge axiale qui garde ladite partie (36) de l'unité à bobine et/ou ladite partie (37) de l'unité hydraulique sous tension, **caractérisé en ce que**
la partie (36) de l'unité à bobine (32) qui délivre la pression mécanique entoure l'unité hydraulique (31) et dans lequel l'unité à bobine (32) présente des gorges (39) recevant des épaulements (40) situés sur l'unité hydraulique (31).

2. Ensemble (30) selon la revendication précédente, dans lequel la partie (36) de l'unité à bobine est déformée radialement par rapport à l'axe (35) des mouvements de la valve.

3. Ensemble (30) selon l'une quelconque des revendications précédentes, dans lequel l'unité à bobine (32) présente des fentes (38) s'étendant axialement.

4. Ensemble (30) selon l'une quelconque des revendications précédentes, dans lequel l'unité à bobine (32) présente un capuchon réalisé en acier magnétique et/ou dépourvu de revêtement.

5. Procédé pour fabriquer un ensemble (30) selon l'une quelconque des revendications 1 à 4, le procédé comprenant l'étape consistant à bloquer la partie (36) de l'unité à bobine (32) avec la partie (37) de l'unité hydraulique (31) sous une pression mécanique due à une déformation élastique de ladite partie (36) de l'unité à bobine et/ou de ladite partie (37) de l'unité hydraulique alors que la bague élastique (34) maintient une charge axiale qui garde ladite partie (36) de l'unité à bobine et/ou ladite partie (37) de l'unité hydraulique sous tension.

6. Procédé selon la revendication 5, comprenant en outre l'étape consistant à déformer élastiquement la partie (36) de l'unité à bobine qui entoure l'unité hydraulique (31) pour assurer le blocage.

7. Procédé selon la revendication 5 ou 6, comprenant en outre l'étape consistant à engager des épaulements (40) situés sur l'unité hydraulique (31) dans des gorges (39) situées sur l'unité à bobine (32).

8. Procédé pour désassembler un ensemble (30) selon l'une quelconque des revendications 1 à 4, le procédé comprenant l'étape consistant à forcer une nouvelle déformation élastique de ladite partie (36) de l'unité à bobine et/ou de ladite partie (37) de l'unité hydraulique afin de débloquer l'unité à bobine (32) vis-à-vis de l'unité hydraulique (31).

9. Outil de désassemblage (50) destiné à fonctionner sur un ensemble (30) selon l'une quelconque des revendications 1 à 4 et utilisant le procédé selon la revendication 8, **caractérisé en ce qu'**il comprend une partie filetée (58) sur laquelle un écrou (56) est vissé afin de commander les mouvements d'un support (60) comprenant une extrémité (48) avec une forme acérée destiné à débloquer l'unité à bobine (32) vis-à-vis de l'unité hydraulique (31).
